(19) Europäisches Patentamt
European Patent Office
Office européen des brevets

(11) EP 2 749 495 B1

(12) FASCICULE DE BREVET EUROPEEN

(45) Date de publication et mention de la délivrance du brevet:
**12.08.2015 Bulletin 2015/33**

(51) Int Cl.:
***B64C 27/04** (2006.01)* ***B64D 31/06** (2006.01)*
***G05D 13/66** (2006.01)* ***B64C 19/00** (2006.01)*
***B64C 27/32** (2006.01)*

(21) Numéro de dépôt: **13005857.1**

(22) Date de dépôt: **17.12.2013**

(54) **Procédé d'entraînement en rotation d'un rotor principal de giravion, selon une consigne de vitesse de rotation à valeur variable**

Drehantriebsverfahren eines Hauptrotors eines Drehflügelflugzeugs gemäß einer Drehgeschwindigkeitseinstellung mit variablem Wert

Method for rotating a main rotor of a rotorcraft, according to a set rotation speed with variable value

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2012 FR 1203607**

(43) Date de publication de la demande:
**02.07.2014 Bulletin 2014/27**

(73) Titulaire: **Airbus Helicopters**
**13725 Marignane Cedex (FR)**

(72) Inventeurs:
- **Dequin, André-Michel**
**F-13540 Puyricard (FR)**
- **Kelaidis, Manousos**
**F-13007 Marseille (FR)**
- **Baud, Antoine**
**F-13002 Marseille (FR)**

(74) Mandataire: **Pouillot, Laurent Pierre Paul**
**GPI & Associés**
**1330, rue Guillibert de la Lauzière**
**EuroParc de Pichauny, Bât B2**
**13856 Aix-en-Provence Cedex 3 (FR)**

(56) Documents cités:
**WO-A1-99/42360**
**WO-A2-2010/143051**
**US-A1- 2003 051 461**
**US-A1- 2007 118 254**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 749 495 B1

## Description

La présente invention est du domaine des giravions équipés d'au moins un rotor à voilure tournante. La présente invention relève plus spécifiquement des méthodes et équipements de traitement de données, adaptés à une fonction spécifique de détermination d'une variation commandée de la vitesse d'entraînement en rotation d'au moins un rotor principal à axe sensiblement vertical équipant le giravion.

Les giravions sont des aéronefs à voilure tournante équipés d'au moins un rotor principal à axe sensiblement vertical procurant la sustentation du giravion. Dans le cadre d'un hélicoptère, le rotor principal procure non seulement la sustentation du giravion, mais aussi sa propulsion et/ou son pilotage en tangage et en roulis.

Au regard des autres aéronefs motorisés, les giravions procurent l'avantage de pouvoir évoluer en vol stationnaire et/ou à basses vitesses, y compris en situation proche du sol. A titre indicatif, les basses vitesses de progression d'un giravion sont communément admises inférieures à 50 kt environ. Les giravions sont néanmoins aptes à évoluer en vol de croisière à des vitesses de progression élevées. A titre indicatif, les vitesses élevées de progression d'un giravion sont communément admises comprises entre environ 75 kt et 160 kt.

Dans ce contexte, il est aussi à prendre en considération des vitesses transitoires de progression du giravion, considérées entre les dites basses vitesses et vitesses élevées de progression du giravion. De telles vitesses transitoires de progression d'un giravion sont traditionnellement utilisées sur de courtes périodes, entre une progression du giravion à basses vitesses et une progression du giravion à vitesses élevées.

D'une manière générale, le domaine de vol d'un giravion est segmenté selon sa vitesse de progression en des plages communément admises de basses vitesses de progression inférieures à 50 kt environ, de vitesses transitoires de progression et de vitesses élevées de progression supérieures à 75 kt. Les valeurs indiquées des plages de vitesses de progression du giravion sont données à titre indicatif et sont susceptibles de varier, notamment selon la structure, selon la masse et/ou selon les performances du giravion par exemple.

La portance du giravion est procurée par le rotor principal et est régulée à partir de commandes de vol opérées par un pilote provoquant une variation de pas collectif des pales composant la voilure tournante du rotor principal. Un tel pilote est potentiellement un pilote humain ou un pilote automatique. L'entraînement en rotation du rotor principal est considéré comme prioritaire, compte tenu de sa fonction essentielle de procurer la sustentation du giravion.

Historiquement, la vitesse d'entraînement en rotation du rotor principal a longtemps été établie comme sensiblement constante. Il a cependant été proposé de faire varier volontairement la vitesse d'entraînement du rotor principal dans une plage de vitesses de rotation restreinte, pour répondre à des besoins spécifiques selon diverses conditions de vol du giravion.

Par exemple pour améliorer les performances d'un giravion en situation de combat, il est connu de faire varier la vitesse d'entraînement du rotor principal en fonction d'une variation de la vitesse air de progression du giravion. On pourra à ce propos se référer à la publication « Enhanced energy maneuverability for attack helicopters using continuous variable rotor speed control » (C.G. SCHAEFER Jr ; F.H. LUTZE, Jr) ; 47th forum American Helicopter Society 1991 ; p. 1293-1303.

Il est aussi connu par le document US 2003/051461 (CERTAIN B.), de réguler le régime d'un moteur de giravion exploité pour l'entraînement de rotors du giravion, dont un rotor principal et un rotor arrière à axe sensiblement horizontal, en fonction de la position du palonnier provoquant une variation de pas collectif des pales du rotor arrière.

Il est cependant à considérer que de multiples conditions de vol du giravion peuvent être prises en compte pour définir une vitesse de rotation du rotor principal souhaitée variable.

Par exemple en ce qui concerne la performance du giravion, il est souhaitable que le pilote dispose d'une faculté optimisée de manoeuvre du giravion, notamment à basses vitesses de progression et/ou en situation du giravion proche du sol, y compris en cas de panne éventuelle de l'un des moteurs équipant le giravion pour l'entraînement en rotation du rotor principal.

Par exemple encore, il est aussi utile de prendre en compte le bruit produit par le giravion pour limiter les nuisances sonores qu'il génère en phase d'approche ou d'éloignement d'un point de posé.

On pourra à ce propos se reporter au document US 6 198 991 (YAMAKAWA et al.), qui propose de réduire les nuisances sonores générées par un giravion en approche d'un point de posé. Selon une modalité potentiellement mise en oeuvre, il est proposé à cet effet de faire varier la vitesse de rotation d'un rotor principal équipant le giravion pour réduire le bruit produit par le giravion.

Par exemple encore, on pourra aussi se reporter au document WO 99/42360 (KAREM ABRAHAM E.), qui propose d'améliorer les performances procurées par un rotor principal de giravion en faisant varier sa vitesse d'entraînement selon un seuil de charge supportée par les pales du rotor principal.

Par exemple encore en ce qui concerne le milieu extérieur ambiant dans lequel évolue le giravion, les caractéristiques physicochimiques de l'air influent sur la portance du giravion pour une incidence donnée des pales du rotor principal. Le giravion est équipé de divers instruments de mesure et/ou de calcul permettant d'identifier la valeur de divers paramètres, tels que la hauteur sol du giravion, l'altitude-pression, l'altitude-densité ou la température extérieure par exemple. A partir de l'identification du milieu extérieur ambiant ou de la vitesse de progression du giravion, des dispositions peuvent être prises pour modifier la vitesse d'entraînement en rotation du rotor principal.

On pourra à ce propos se reporter au document US2007/118254 (BARNES G.W. et al.), qui propose de faire varier la vitesse de rotation d'un rotor principal équipant un giravion, selon deux valeurs considérées comme basse et haute sous conditions prédéfinies de seuils de valeurs de divers paramètres liés à des conditions de vol du giravion préalablement identifiées.

On pourra aussi se reporter à ce propos au document WO2010143051 (AGUSTA SPA et al.), qui propose de faire varier la vitesse de rotation d'un rotor principal équipant un giravion conformément à une cartographie préalablement établie selon diverses conditions de vol du giravion.

Dans ce contexte, la démarche de la présente invention s'inscrit dans une recherche d'optimisation de la faculté offerte de modifier aisément la vitesse de rotation d'au moins un rotor principal équipant un giravion, selon des conditions de vol spécifiques du giravion qui s'avèrent potentiellement très diverses.

Dans sa généralité, la présente invention a pour but de proposer un procédé d'entraînement en rotation d'au moins un rotor principal, mettant en oeuvre une méthode de détermination d'une valeur variable d'une consigne de régulation du fonctionnement d'un groupe de motorisation d'entraînement en rotation du rotor principal. Ladite consigne de régulation est notamment relative à une vitesse de rotation souhaitée d'entraînement en rotation du rotor principal.

Il est plus particulièrement recherché par la présente invention de pouvoir aisément modifier la vitesse de rotation du rotor principal selon des modalités applicables à de quelconques giravions de structures respectives données et selon divers critères relatifs aux conditions de vol du giravion pouvant être pris en compte isolément ou en combinaison.

Le procédé de la présente invention est un procédé d'entraînement en rotation d'au moins un rotor principal à axe sensiblement vertical d'un giravion par un groupe de motorisation équipant le giravion.

Le procédé comprend au moins une opération d'application par une unité de commande d'une méthode de détermination de la valeur d'une consigne de régulation relative à une vitesse d'entraînement en rotation du dit au moins un rotor principal. Ladite méthode détermine la valeur de ladite consigne de régulation au moins selon la valeur d'un paramètre physicochimique de l'air extérieur ambiant du giravion.

Le procédé comprend aussi au moins une opération de transmission de la valeur de la consigne de régulation préalablement déterminée à une unité de régulation du fonctionnement du groupe de motorisation. L'unité de régulation provoque un entraînement du dit au moins un rotor principal conformément à la valeur de la consigne de régulation transmise.

Selon la présente invention, le dit procédé est principalement reconnaissable en ce que la valeur de la consigne de régulation est déterminée au moins par application d'une règle de calcul. Cette règle de calcul est génératrice en continu d'une variation progressive et continue d'une valeur d'une consigne initiale à partir de laquelle est déterminée la consigne de régulation. La variation progressive et continue de la valeur de la consigne initiale est calculée selon une variation progressive et continue de la valeur de la densité de l'air extérieur ambiant du giravion.

Il est à considérer que la notion de variation « continu » est susceptible de relever indifféremment d'une variation analogique ou d'une variation numérique à séquences données aussi brèves que possible.

Grâce à ces dispositions, la variation de la valeur de la consigne initiale est opérée en continu par application de la règle de calcul intégrant un paramètre de calcul relatif à la densité, ou par analogie relatif à la masse volumique de l'air extérieur ambiant du giravion. Une variation de la valeur du paramètre de calcul induit une variation de la valeur de la consigne initiale calculée par application de la règle de calcul. Le cas échéant, la valeur de la consigne initiale est aisément modifiable quelles que soient des conditions de vol du giravion spécifiques préalablement identifiées.

Plus particulièrement, une valeur de la consigne initiale issue de l'application de la règle de calcul est aisément modifiable par des lois secondaires propres à des conditions de vol spécifiques du giravion préalablement identifiées. De telles conditions de vol sont identifiées en prenant en compte des critères de modification respectifs prédéfinis permettant de modifier selon les besoins au moins la valeur de la consigne initiale sinon la valeur d'une consigne calculée issue de la consigne initiale et dont la valeur est modifiée par application d'au moins une loi secondaire.

Les dites lois secondaires peuvent avantageusement :

- ) être prises en considération isolément ou en combinaison,
- ) intégrer la règle de calcul individuellement ou collectivement au moins deux à deux,
- ) être appliquées individuellement ou collectivement au moins deux à deux indifféremment à la consigne initiale ou à une consigne calculée.

Par ailleurs, une dite loi secondaire est potentiellement et pour exemple :

- ) une règle de correction modifiant indifféremment la valeur de la consigne initiale ou la valeur d'une consigne calculée,

- ) une règle de limitation indifféremment de la valeur de la consigne initiale ou de la valeur d'une consigne calculée, selon au moins un seuil de valeur admis préalablement défini,

- ) une règle de restriction d'une variation de la consigne de régulation, par modification indifféremment de la valeur de la consigne initiale, de la valeur d'une consigne calculée et de la valeur d'une consigne limitée issue de l'application de la règle de limitation.

Il est plus particulièrement proposé une dite règle de calcul de la valeur de la consigne initiale conforme à la formulation suivante :

$$NR_{ini}^2 . \sigma = NR_0^2$$

dans laquelle formulation :

$NR_{ini}$ est la valeur de la consigne initiale,

$\sigma$ est la densité courante de l'air extérieur ambiant du giravion,

$NR_0$ est une valeur constante relative à une vitesse prédéfinie d'entraînement du rotor principal. Ladite vitesse prédéfinie est notamment considérée selon une densité de l'air extérieur ambiant à une pression atmosphérique de 1013.25 hPa et à une température de 15°C.

Il est à considérer que ladite valeur constante est susceptible d'être avantageusement choisie conformément à diverses vitesses prédéfinies de valeurs respectives, selon la prise en compte sélective d'un ou de plusieurs dits critères de modification modifiant au moins la valeur de la consigne initiale sinon la valeur d'une consigne calculée.
Conformément à la présente invention, la valeur de la consigne de régulation transmise à l'unité de régulation est potentiellement la valeur de la consigne initiale.
Selon une forme avantageuse de réalisation, ladite méthode comprend au moins une opération de calcul de la valeur d'au moins une consigne calculée. La valeur de la consigne calculée est issue de la valeur de la consigne initiale modifiée par application d'au moins un critère de correction relatif par exemple au moins à la vitesse de progression du giravion sinon aussi à l'altitude de progression du giravion. L'altitude de progression du giravion est par exemple évaluée par mesure indifféremment de l'altitude pression et/ou de la hauteur sol.
A titre d'exemple, la valeur de la consigne calculée est avantageusement définie par application d'une règle de correction conforme à la formulation suivante :

$$NR_c = NR_{ref} + k.(NR_{ini} - NR_{ref})$$

dans laquelle règle de correction :

$NR_c$ est la valeur de la consigne calculée issue de l'application de la règle de correction,

$NR_{ref}$ est une vitesse de référence prédéfinie d'entraînement en rotation du rotor principal.

k est un coefficient limitant constant dont la valeur est comprise entre 0,3 et 1 inclus, et

$NR_{ini}$ est la valeur de la consigne initiale,

Selon cette règle de correction, la valeur de $NR_{ref}$ et la valeur de k sont prédéfinies selon au moins des plages de vitesse de progression du giravion préalablement établies, respectivement au moins à basses vitesses inférieures à 50 kt plus ou moins 10% et à vitesses élevées supérieures à 70 kt plus ou moins 10%, sinon aussi au moins selon des plages d'altitudes de progression du giravion préalablement établies.
On relèvera qu'une telle règle de correction intègre potentiellement et avantageusement la règle de calcul de la valeur de la consigne initiale.
Tel que précédemment mentionné, les valeurs mentionnées des vitesses de progression du giravion sont données à titre indicatif et sont susceptibles de varier, notamment selon la structure propre du giravion, selon sa masse y compris en prenant potentiellement en compte sa masse courante, et/ou selon la performance de ses équipements, rotor principal notamment.

Selon une forme de réalisation, une valeur d'une première consigne calculée est générée par application d'un critère de correction relatif à la vitesse de progression du giravion.

Par exemple à basses vitesses de progression du giravion, la valeur de la vitesse de référence et la valeur du coefficient limitant sont prédéfinies conformément à une valeur d'une première consigne calculée qui est potentiellement supérieure à la valeur de la consigne initiale.

De telles dispositions permettent de favoriser les performances du rotor principal lorsque le giravion évolue à basses vitesses indépendamment de la prise en compte de l'altitude de progression du giravion.

Par exemple encore, à vitesses élevées de progression du giravion la valeur de la vitesse de référence et la valeur du coefficient limitant sont prédéfinies conformément à une valeur de la première consigne calculée qui est définie égale à la valeur de la consigne initiale.

De telles dispositions permettent de procurer une performance optimisée du giravion tout en favorisant une performance acoustique du giravion par limitation du bruit qu'il produit.

On relèvera que selon la structure du giravion et selon les besoins, diverses valeurs peuvent être affectées à $NR_{ref}$, à k et à $NR_0$ pour l'exécution de ladite règle de correction. Il est ainsi illustré un avantage de la présente invention, dont les dispositions proposées permettent une modularité aisée de la prise en compte, selon la structure du giravion et selon les besoins, de valeurs spécifiques de paramètres de calcul prédéfinis que comprend la règle de calcul et/ou au moins une règle de correction. Une telle modularité relève notamment d'une affectation de valeurs prédéfinies spécifiques aux paramètres de calcul, tels que les paramètres de calcul dénommés $NR_{ref}$, k et $NR_0$, selon la structure du giravion et/ou selon le ou les critères de correction de la valeur de la consigne initiale ou d'une consigne calculée pris en compte.

A titre illustratif et selon une forme de réalisation, il est potentiellement pris en considération à basses vitesses et à vitesses élevées de progression du giravion une valeur $NR_{ref}$ commune à ces plages de vitesses de progression du giravion et des valeurs de k respectives ainsi que des valeurs de $NR_0$ respectives pour chacune des dites plages de vitesse de progression du giravion.

Selon une forme avantageuse de réalisation, à vitesses transitoires de progression du giravion comprises entre les basses vitesses et les vitesses élevées, la valeur d'une première consigne calculée est définie par correction de la valeur de la consigne initiale selon une variation continue entre la valeur de la première consigne calculée définie à basses vitesses et de la valeur de la première consigne calculée définie à vitesses élevées.

De telles dispositions permettent d'éviter une variation rapide de la valeur de la consigne de régulation vers des valeurs prédéfinies de seuils admis de vitesses d'entraînement en rotation du rotor principal, vitesse limite maximale et vitesse limite minimale notamment.

Conformément à la présente invention, la valeur de la consigne de régulation transmise à l'unité de régulation est potentiellement la valeur de la première consigne calculée.

Selon une autre forme de réalisation, la valeur d'une deuxième consigne calculée est générée par application d'un critère de correction relatif à une progression du giravion à vitesses élevées pour des plages d'altitude du giravion préalablement établies, respectivement à basses altitudes inférieures à 250 m plus ou moins 20% et à altitudes élevées supérieures à 650 m plus ou moins 20%.

Il est notamment recherché de réduire les nuisances sonores générées par le giravion en approche d'un point de posé, héliport notamment. A vitesses élevées de progression du giravion, la valeur de la deuxième consigne calculée est par exemple définie à cet effet selon les modalités suivantes :

- ) à basses altitudes la valeur de la deuxième consigne calculée est définie par diminution de la valeur de la consigne initiale d'une valeur constante comprise entre 3% et 10% de la valeur de la vitesse prédéfinie de la règle de calcul,

- ) à altitudes élevées la valeur de la deuxième consigne calculée est définie égale indifféremment à la valeur de la consigne initiale ou à la valeur de la première consigne,

- ) à altitudes modérées comprises entre les altitudes élevées et les hautes altitudes, la valeur de la deuxième consigne calculée est définie selon une variation continue entre la valeur de la deuxième consigne calculée définie à basses altitudes et la valeur de la deuxième consigne calculée définie à altitudes élevées.

Il est à considérer que conformément à de telles dispositions de calcul de la valeur de la deuxième consigne calculée, la prise en compte de la dite vitesse de référence correspond à la prise en compte de ladite vitesse prédéfinie, la valeur de la vitesse de référence étant dans ce cas la valeur de la vitesse prédéfinie.

La valeur de la deuxième consigne calculée définie à basses altitudes est par exemple au plus égale sinon inférieure à une vitesse minimale prédéfinie d'entraînement en rotation du rotor principal.

On relèvera que les valeurs de hauteurs sol mentionnées sont données à titre indicatif, les notions de basses altitudes, altitudes modérées et altitudes élevées étant à apprécier selon l'usage dans le domaine des giravions. Par ailleurs, la notion de hauteur sol est à apprécier selon une altitude de progression du giravion, quelles que soit les paramètres exploités pour évaluer une telle altitude de progression, tels que l'altitude-pression ou la hauteur sol en elle-même.

Conformément à la présente invention, la valeur de la consigne de régulation transmise à l'unité de régulation est potentiellement la valeur de la deuxième consigne calculée.

Il est à considérer une source de nuisances induite par les contraintes subies par le ou les rotors du giravion entraînés en rotation, notamment à vitesses élevées de progression du giravion. De telles contraintes considérées comme excessives à un seuil de contraintes donné, sont potentiellement provoquées par une vitesse critique de déplacement des pales du rotor principal. Il est en conséquence proposé de prendre en considération les contraintes subies par les pales du rotor principal dans le calcul de la valeur de la consigne de régulation.

A cet effet et selon une forme préférée de réalisation, le procédé comprend préalablement à la transmission à l'unité de régulation de la valeur de la consigne de régulation, une opération de limitation de la valeur de la consigne de régulation dans une plage de vitesses tolérées prédéfinie selon une vitesse nominale d'entraînement du rotor principal. Ladite plage de vitesses tolérées est prédéfinie entre une vitesse limite maximale de 105% plus ou moins 3% de la vitesse nominale et une vitesse limite minimale de 92% plus ou moins 3% de la vitesse nominale.

On relèvera que selon une forme particulière de réalisation, ladite vitesse maximale prédéfinie est la vitesse limite maximale et ladite vitesse minimale prédéfinie est la vitesse limite minimale.

Ladite opération de limitation comprend potentiellement une opération de modification de la valeur de la vitesse limite maximale et/ou de la valeur de la vitesse limite minimale, selon les contraintes subies par les pales du rotor principal.

Selon un exemple de réalisation, la vitesse limite maximale est diminuée conformément à une interdiction de franchissement d'un nombre prédéfini de Mach admis en extrémité de pale du rotor principal.

Plus particulièrement en considérant une progression du giravion à basses vitesses inférieures à 50 kt plus ou moins 10%, le nombre prédéfini de Mach admis en extrémité de pale du rotor principal est compris entre 0,70 et 0,80.

Plus particulièrement encore en considérant une progression du giravion à vitesses élevées supérieures à 70 kt plus ou moins 10%, le nombre prédéfini de Mach admis en extrémité de pale du rotor principal est compris entre 0,90 et 0,95.

Selon un autre exemple de réalisation, la vitesse limite minimale est augmentée conformément à une interdiction de franchissement d'une valeur maximale admise du coefficient de portance moyen des pales du rotor principal pour un paramètre d'avancement donné du rotor principal.

A cet effet, il est notamment pris en compte une fonction potentiellement linéaire définissant les valeurs d'un critère de restriction selon les valeurs respectives du coefficient de portance moyen des pales du rotor principal et du paramètre d'avancement du rotor principal.

Il est à relever que pour certaines conditions de vol du giravion considérées comme extrêmes dans l'enveloppe de vol d'un giravion de structure donnée, il peut se produire un conflit entre la valeur de la vitesse limite minimale augmentée et la valeur de la vitesse limite maximale diminuée. Plus particulièrement sous de dites conditions de vol extrêmes, la valeur de la vitesse limite minimale augmentée peut tendre à être supérieure à la valeur de la vitesse limite maximale diminuée.

Par exemple, à altitudes élevées et à basses températures de l'ordre inférieures à moins 18°C (-18°C), la valeur de la vitesse limite minimale augmentée tend à être supérieure à la valeur de la vitesse limite maximale diminuée. Dans ce cas, il est préféré de prendre en compte la valeur de la vitesse limite minimale pour déterminer la valeur de la consigne de régulation au détriment de la valeur de la vitesse limite minimale augmentée, pour favoriser la manoeuvrabilité du giravion.

C'est pourquoi, le procédé comprend de préférence une opération de comparaison entre la valeur de la vitesse limite maximale diminuée et la valeur de la vitesse limite minimale augmentée. L'opération de comparaison est génératrice selon des conditions de vol extrêmes préalablement identifiées, d'un ordre de sélection d'une valeur exploitée pour déterminer la valeur de la consigne de régulation, parmi la valeur la plus élevée ou inversement la valeur la plus faible de l'une ou l'autre des vitesses limites dont les valeurs sont comparées.

La valeur de la consigne de régulation transmise à l'unité de régulation est potentiellement la valeur de l'une quelconque de la vitesse limite maximale et de la vitesse limite minimale conformément à une limitation de la valeur de la consigne de régulation dans la dite plage de vitesses tolérées.

Quelles que soient les modalités mise en oeuvre pour faire varier la valeur de la consigne de régulation transmise à l'unité de régulation, il est souhaité de limiter en permanence cette variation préalablement à ladite transmission. Ces dispositions facilitent la régulation du fonctionnement du ou des moteurs du giravion procurant l'entraînement en rotation du rotor principal.

A cet effet et selon une forme préférée de réalisation, le procédé comprend préalablement à la transmission à l'unité de régulation de la valeur de la consigne de régulation, une opération de restriction limitant une variation par seconde de la valeur de la consigne de régulation comprise entre 0,5% et 2% de la valeur de la consigne de régulation.

La valeur de la consigne de régulation transmise à l'unité de régulation est potentiellement la valeur d'une consigne rectifiée issue de l'exécution de l'opération de restriction.

Par ailleurs, le procédé comprend de préférence une opération d'affichage d'au moins une première information relative à la vitesse d'entraînement du rotor principal mesurée et d'une deuxième information relative à la valeur de la consigne de régulation transmise à l'unité de régulation. Une telle opération d'affichage permet au pilote du giravion d'apprécier la pertinence d'une variation de la vitesse d'entraînement en rotation du rotor principal.

Un exemple de réalisation de la présente invention va être décrit en relation avec la figure unique de la planche annexée, ladite figure unique étant un schéma illustrant un exemple préféré de réalisation d'un procédé conforme à la présente invention.

Sur la figure unique, un giravion 1 est équipé d'au moins un rotor principal 2 à axe sensiblement vertical procurant au moins la sustentation du giravion, sinon aussi sa propulsion et son pilotage en vol dans le cas d'un hélicoptère. Le rotor principal 2 est entraîné en rotation par un groupe de motorisation 3 comprenant au moins un moteur, turbomoteur notamment.

Il est recherché de faire varier la vitesse d'entraînement en rotation du rotor principal 2 selon diverses conditions de vol du giravion 1. La variation recherchée de la vitesse d'entraînement en rotation du rotor principal 2 est commandée selon la prise en compte de divers critères représentatifs des conditions de vol du giravion 1.

A cet effet, le giravion 1 est équipé d'une unité de commande 4 génératrice de la valeur d'une consigne de régulation C transmise à une unité de régulation 5 du fonctionnement du groupe de motorisation 3.

Ladite consigne de régulation C est notamment relative à une vitesse commandée d'entraînement en rotation du rotor principal 2, la valeur de la consigne de régulation C étant déterminée par application d'une méthode de calcul comprenant potentiellement une ou plusieurs opérations de calcul successives.

Conformément à l'application de cette méthode, une opération de détermination 6 par calcul de la valeur d'une consigne initiale $NR_{ini}$ est exécutée par application d'une règle de calcul 7 intégrant divers paramètres initiaux de calcul. La règle de calcul 7 prend en compte un premier paramètre initial relatif à la densité D de l'air extérieur ambiant, de sorte qu'une variation continue de ladite densité D courante déterminée par une instrumentation de bord 8 équipant le giravion 1 provoque une variation continue de la valeur de la consigne initiale $NR_{ini}$.

Selon une formulation spécifique de la règle de calcul 7, il est pris en compte au moins un deuxième paramètre initial relatif à une vitesse prédéfinie $NR_0$ d'entraînement du rotor principal 2 considérée selon une densité de l'air extérieur ambiant à une pression atmosphérique de 1013.25 hPa et à une température de 15°C. La valeur de la vitesse prédéfinie $NR_0$ est une valeur constante prise en compte par la règle de calcul 7.

Il est cependant à relever que la dite valeur constante est potentiellement considérée selon des conditions de vol données du giravion 1, ladite valeur constante pouvant être avantageusement établie selon des valeurs respectives pour différentes conditions de vol du giravion 1 prédéfinies.

Le cas échéant, une opération de correction 9 par calcul de la valeur de la consigne initiale NRini est potentiellement effectuée selon des conditions de vol spécifiques prédéterminées. L'opération de correction 9 par calcul est potentiellement exécutée par application d'une règle de correction 10 par calcul de la valeur de la consigne initiale $NR_{ini}$. Ladite règle de correction intègre à cet effet au moins un critère de correction 10' ou 10".

Il est à considérer que la règle de correction 10 intègre potentiellement et avantageusement la règle de calcul 7. L'application de la règle de correction 10 est potentiellement génératrice soit de la valeur de la consigne initiale $NR_{ini}$ soit de la valeur d'une consigne calculée $NR_c$, par la prise en compte de paramètres de correction intégrés dans la règle de correction 10. Les valeurs respectives des paramètres de correction sont prédéfinies selon des conditions de vol données du giravion.

De tels paramètres de correction sont notamment relatifs à un coefficient limitant k et à une vitesse de référence $NR_{ref}$ prédéfinie d'entraînement en rotation du rotor principal 1.

La valeur de la consigne calculée $NR_c$ est par exemple la valeur d'une première consigne calculée $NR_{c1}$ élaborée en prenant en compte isolément la vitesse AS de progression du giravion 1.

Des plages de vitesses AS de progression du giravion 1 communément admises sont identifiées, notamment une plage de basses vitesses BV de progression du giravion 1 d'environ 50 kt, une plage de vitesses transitoires VT de progression du giravion 1 comprises entre les basses vitesses BV et des vitesses élevées VE de progression du giravion 1, et une plage de dites vitesses VE élevées de progression du giravion 1 supérieures à environ 70 kt. Des valeurs respectives de la première consigne calculée $NR_{c1}$ sont sélectivement générées pour chacune des dites plages de vitesse de progression du giravion.

La consigne calculée $NR_c$ est par exemple encore une deuxième consigne calculée $NR_{c2}$ dont la valeur est élaborée en prenant en compte la vitesse AS de progression du giravion 1 et l'altitude Z de progression du giravion 1 évaluée par l'instrumentation de bord 8 du giravion 1. L'altitude Z de progression du giravion 1 est par exemple évaluée selon une mesure de la hauteur sol du giravion ou selon une mesure de l'altitude-pression.

Des plages d'altitude Z du giravion 1 communément admises sont identifiées, notamment une plage de basses altitudes ZB environ inférieures à 250 m, une plage d'altitudes modérées ZM comprises entre les basses altitudes BA et des altitudes élevées ZE, et une plage de dites altitudes élevées ZE supérieures à environ 650 m. De telles valeurs de plages d'altitudes sont mentionnées à titre indicatif, et sont à apprécier selon les usages dans le domaine de l'aéronautique.

Des valeurs respectives de la deuxième consigne calculée $NR_{c2}$ sont sélectivement générées pour chacune des combinaisons entre les dites plages de vitesse AS de progression du giravion et les dites plages d'altitude Z.

De préférence, une opération de limitation 11 de la valeur de la consigne de régulation C est opérée préalablement à sa transmission à l'unité de régulation 5. L'exécution de l'opération de limitation 11 génère la valeur d'une consigne limitée $NR_{lim}$ par application d'une règle de limitation 12 limitant la valeur de la consigne initiale $NR_{ini}$ ou la valeur d'une consigne calculée $NR_c$ à des valeurs de vitesses limites. A cet effet, une plage de vitesses tolérées d'entraînement en rotation du rotor principal 2 est prédéfinie entre une vitesse limite maximale $NR_{max}$ et une vitesse limite minimale $NR_{min}$. La valeur de la consigne initiale $NR_{ini}$ ou la valeur d'une consigne calculée $NR_c$ sont limitées dans ladite plage de vitesses tolérées.

L'opération de limitation est en outre susceptible de prendre avantageusement en compte au moins un critère limitant 13 relatif aux contraintes supportées par les pales du rotor principal 2. De tels critères limitant sont notamment relatifs à une interdiction de franchissement d'un nombre prédéfini de Mach admis en extrémité de pale du rotor principal 2 (Mach) ou à une interdiction de franchissement d'une valeur maximale admise du coefficient de portance moyen des pales du rotor principal pour un paramètre d'avancement donné du rotor principal 2 ($Czm/\mu$).

Il est encore pris en compte une opération de restriction 18 d'une variation de la valeur de la consigne de régulation C préalablement à sa transmission à l'unité de régulation 5. L'opération de restriction 18 génère la valeur d'une consigne rectifiée $NR_{rec}$, par application d'une règle de restriction 14 modifiant la valeur des dites vitesses limites, vitesse limite maximale $NR_{max}$ ou vitesse limite minimale $NR_{min}$ selon le critère de restriction 13 pris en compte.

Il est à considérer que la valeur de la consigne de régulation C transmise à l'unité de régulation est potentiellement la valeur de ladite consigne initiale $NR_{ini}$, la valeur d'une dite consigne calculée $NR_c$, la valeur d'une dite consigne limitée $NR_{lim}$ ou la valeur d'une dite consigne rectifiée $NR_{rec}$.

Par ailleurs, l'unité de commande 4 est en relation avec des moyens d'affichage 15 équipant le giravion 1. Le procédé comprend une opération d'affichage exploitant les moyens d'affichage 15 pour procurer au pilote du giravion 1 une première information 16 relative à la vitesse d'entraînement du rotor principal 2 mesurée par l'instrumentation de bord 8 du giravion 1 et une deuxième information 17 relative à la valeur de la consigne de régulation C transmise à l'unité de régulation 5.

## Revendications

1. Procédé d'entraînement en rotation d'au moins un rotor principal (2) à axe sensiblement vertical d'un giravion (1) par un groupe de motorisation (3) équipant le giravion (1), ledit procédé comprenant au moins les opérations suivantes :

   - ) appliquer par une unité de commande (4) une méthode de détermination de la valeur d'une consigne de régulation (C) relative à une vitesse d'entraînement en rotation du dit au moins un rotor principal (2), ladite méthode déterminant la valeur de la consigne de régulation (C) au moins selon la valeur d'un paramètre physicochimique de l'air extérieur ambiant du giravion, et
   - ) transmettre la valeur de la consigne de régulation (C) préalablement déterminée à une unité de régulation (5) du fonctionnement du groupe de motorisation (3), l'unité de régulation (5) provoquant un entraînement du dit au moins un rotor principal (2) conformément à la valeur de la consigne de régulation (C) transmise,

   **caractérisé en ce que** la valeur de la consigne de régulation (C) est déterminée au moins par application d'une règle de calcul (7) génératrice en continu d'une variation progressive et continue d'une valeur d'une consigne initiale ($NR_{ini}$) à partir de laquelle est déterminée la consigne de régulation (C), la variation progressive et continue de la valeur de la consigne initiale ($NR_{ini}$) étant calculée selon une variation progressive et continue de la valeur de la densité (D) de l'air extérieur ambiant du giravion (1).

2. Procédé selon la revendication 1,
   **caractérisé en ce que** la règle de calcul (7) est plus particulièrement conforme à la formulation suivante :

$$NR_{ini}^2 . \sigma = NR_0^2$$

dans laquelle formulation :

$NR_{ini}$ est la valeur de la consigne initiale,
$\sigma$ est la densité courante de l'air extérieur ambiant du giravion,
$NR_0$ est une valeur constante relative à une vitesse prédéfinie d'entraînement du rotor principal considérée selon une densité de l'air extérieur ambiant à une pression atmosphérique de 1013.25 hPa et à une température de 15°C.

**3.** Procédé selon l'une quelconque des revendications 1 et 2,
**caractérisé en ce que** la valeur de la consigne de régulation (C) transmise à l'unité de régulation est la valeur de la consigne initiale ($NR_{ini}$).

**4.** Procédé selon l'une quelconque des revendications 1 à 3,
**caractérisé en ce que** ladite méthode comprend au moins une opération de calcul (9) de la valeur d'au moins une consigne calculée ($NR_c$), la valeur de ladite consigne calculée ($NR_c$) étant issue de la valeur de la consigne initiale ($NR_{ini}$) modifiée par application d'au moins un critère de correction (10', 10") relatif au moins à la vitesse (AS) de progression du giravion 1 sinon aussi à l'altitude (Z) de progression du giravion (1).

**5.** Procédé selon la revendication 4,
**caractérisé en ce que** la valeur de la consigne calculée ($NR_c$) est définie par application d'une règle de correction (10) conforme à la formulation suivante :

$$NR_c = NR_{ref} + k.(NR_{ini} - NR_{ref})$$

dans laquelle règle de correction :

$NR_c$ est la valeur de la consigne calculée ($NR_c$) issue de l'application de la règle de correction (10),
$NR_{ref}$ est une vitesse de référence prédéfinie d'entraînement en rotation du rotor principal (2),
k est un coefficient limitant constant dont la valeur est comprise entre 0,3 et 1 inclus, et
$NR_{ini}$ est la valeur de la consigne initiale ($NR_{ini}$),

et dans laquelle règle de correction (10) la valeur de $NR_{ref}$ et la valeur de k sont prédéfinies au moins selon des plages de vitesse de progression du giravion préalablement établies, respectivement au moins à basses vitesses (BV) inférieures à 50 kt plus ou moins 10% et à vitesses élevées (VE) supérieures à 70 kt plus ou moins 10%.

**6.** Procédé selon la revendication 5,
**caractérisé en ce qu'**une valeur d'une première consigne calculée ($NR_{c1}$) est générée par application d'un critère de correction (10') relatif à la vitesse (AS) de progression du giravion (1).

**7.** Procédé selon la revendication 6,
**caractérisé en ce qu'**à vitesses élevées (VE) de progression du giravion la valeur de la vitesse de référence ($NR_{ref}$) et la valeur du coefficient limitant (k) sont prédéfinies conformément à une valeur de la première consigne calculée ($NR_{c1}$) définie égale à la valeur de la consigne initiale ($NR_{ini}$).

**8.** Procédé selon l'une quelconque des revendications 6 et 7,
**caractérisé en ce qu'**à vitesses transitoires (VT) de progression du giravion comprises entre les basses vitesses (BV) et les vitesses élevées (VE), la valeur d'une première consigne calculée ($NR_{c1}$) est définie par correction de la valeur de la consigne initiale ($NR_{ini}$) selon une variation continue entre la valeur de la première consigne calculée ($NR_{c1}$) définie à basses vitesses (BV) et la valeur de la première consigne calculée ($NR_{c1}$) définie à vitesses élevées (VE).

**9.** Procédé selon l'une quelconque des revendications 6 à 8,
**caractérisé en ce que** la valeur de la consigne de régulation (C) transmise à l'unité de régulation (5) est la valeur de la première consigne calculée ($NR_{c1}$).

**10.** Procédé selon la revendication 4,
**caractérisé en ce que** la valeur d'une deuxième consigne calculée ($NR_{c2}$) est générée par application d'un critère de correction (10") relatif à une progression du giravion à vitesses élevées (VE) pour des plages d'altitude (Z) du giravion (1) préalablement établies, respectivement à basses altitudes (ZB) inférieures à 250 m plus ou moins 20% et à altitudes élevées (ZE) supérieures à 650 m plus ou moins 20%.

**11.** Procédé selon les revendications 2, 6 et 10,
**caractérisé en ce qu'**à vitesses élevées (VE) de progression du giravion (1), la valeur de la deuxième consigne calculée ($NR_{c2}$) est définie selon les modalités suivantes :

- ) à basses altitudes (ZB) la valeur de la deuxième consigne calculée ($NR_{c2}$) est définie par diminution de la valeur de la consigne initiale ($NR_{ini}$) d'une valeur constante comprise entre 3% et 10% de la valeur de la vitesse prédéfinie (NR0) de la règle de calcul,
- ) à altitudes élevées (ZE) la valeur de la deuxième consigne calculée ($NR_{c2}$) est définie égale indifféremment à la valeur de la consigne initiale ($NR_{ini}$) ou à la valeur de la première consigne ($NR_{c1}$),
- ) à altitudes modérées (ZM) comprises entre les basses altitudes (ZB) et les altitudes élevées (ZE), la valeur de la deuxième consigne calculée ($NR_{c2}$) est définie selon une variation continue entre la valeur de la deuxième consigne calculée ($NR_{c2}$) définie à basses altitudes (ZB) et de la valeur de la deuxième consigne calculée ($NR_{c2}$) définie à altitudes élevées (ZE).

**12.** Procédé selon l'une quelconque des revendications 10 et 11,
**caractérisé en ce que** la valeur de la consigne de régulation (C) transmise à l'unité de régulation (5) est la valeur de la deuxième consigne calculée ($NR_{c2}$).

**13.** Procédé selon l'une quelconque des revendications 1 à 12,
**caractérisé en ce que** le procédé comprend préalablement à la transmission à l'unité de régulation (5) de la valeur de la consigne de régulation (C), une opération de limitation (11) de la valeur de la consigne de régulation (C) dans une plage de vitesses tolérées prédéfinie selon une vitesse nominale d'entraînement du rotor principal, entre une vitesse limite maximale ($NR_{max}$) de 105% plus ou moins 3% de la vitesse nominale et une vitesse limite minimale ($NR_{min}$) de 92% plus ou moins 3% de la vitesse nominale.

**14.** Procédé selon la revendication 13,
**caractérisé en ce que** la vitesse limite maximale ($NR_{max}$) est diminuée conformément à une interdiction de franchissement d'un nombre prédéfini de Mach admis en extrémité de pale du rotor principal(2).

**15.** Procédé selon la revendication 14,
**caractérisé en ce qu'**à basses vitesses (BV) de progression du giravion (1) inférieures à 50 kt plus ou moins 10%, le nombre prédéfini de Mach admis en extrémité de pale du rotor principal (2) est compris entre 0,70 et 0,80.

**16.** Procédé selon l'une quelconque des revendications 14 et 15,
**caractérisé en ce qu'**à vitesses élevées (VE) de progression du giravion (1) supérieures à 70 kt plus ou moins 10%, le nombre prédéfini de Mach admis en extrémité de pale du rotor principal (2) est compris entre 0,90 et 0,95.

**17.** Procédé selon l'une quelconque des revendications 13 à 16,
**caractérisé en ce que** la vitesse limite minimale ($NR_{min}$) est augmentée conformément à une interdiction de franchissement d'une valeur maximale admise du coefficient de portance moyen des pales du rotor principal (2) pour un paramètre d'avancement donné du rotor principal (2).

**18.** Procédé selon l'une quelconque des revendications 13 à 17,
**caractérisé en ce que** la valeur de la consigne de régulation (C) transmise à l'unité de régulation (5) est la valeur de l'une quelconque de la vitesse limite maximale ($NR_{max}$) et de la vitesse limite minimale ($NR_{min}$) conformément à une limitation de la valeur de la consigne de régulation (C) dans la dite plage de vitesses tolérées.

**19.** Procédé selon l'une quelconque des revendications 1 à 18,

**caractérisé en ce que** le procédé comprend préalablemehnt à la transmission à l'unité de régulation (5) de la valeur de la consigne de régulation (C), une opération de restriction (18) limitant une variation par seconde de la valeur de la consigne de régulation (C) comprise entre 0,5% à 2% de la valeur de la consigne de régulation (C).

**20.** Procédé selon la revendication 19,
**caractérisé en ce que** la valeur de la consigne de régulation (C) transmise à l'unité de régulation (5) est la valeur d'une consigne rectifiée ($NR_{rec}$) issue de l'exécution de l'opération de restriction (18).

**21.** Procédé selon l'une quelconque des revendications 1 à 20,
**caractérisé en ce que** le procédé comprend une opération d'affichage d'au moins une première information (16) relative à la vitesse d'entraînement du rotor principal (2) mesurée et d'une deuxième information (17) relative à la valeur de la consigne de régulation (C) transmise à l'unité de régulation (5).

## Patentansprüche

**1.** Drehantriebsverfahren eines Hauptrotors (2) mit im Wesentlichen vertikaler Achse eines Drehflügelflugzeugs (1) durch eine Motorgruppe (3), mit der das Drehflügelflugzeug (1) ausgerüstet ist, wobei das Verfahren mindestens folgende Schritte aufweist:

- ) Anwenden eines Verfahrens der Bestimmung des Wertes eines Regelsollwertes (C) bezüglich einer Drehantriebsgeschwindigkeit des mindestens einen Hauptrotors (2) durch eine Steuereinheit (4), wobei das Verfahren den Wert des Regelungssollwerts (C) mindestens gemäß dem Wert eines chemisch-physikalischen Parameters der Außenumgebungsluft des Drehflügelflugzeugs bestimmt, und
- ) Übertragen des zuvor bestimmten Wertes des Regelungssollwertes (C) an eine Einheit (5) zur Regelung des Betriebs der Motorgruppe (3), wobei die Regelungseinheit (5) einen Antrieb des mindestens einen Hauptrotors (2) in Übereinstimmung mit dem Wert des übertragenen Regelungssollwertes (C) bewirkt,

**dadurch gekennzeichnet, dass** der Wert des Regelungssollwertes (C) mindestens durch die Anwendung einer Rechenregel (7) bestimmt wird, die fortlaufend eine schrittweise und fortschreitende Änderung eines Wertes eines ursprünglichen Regelungssollwertes ($NR_{ini}$) erzeugt, von dem ausgehend der Regelungssollwert (C) bestimmt wird, wobei die schrittweise und fortschreitende Änderung des ursprünglichen Sollwerts ($NR_{ini}$) gemäß einer schrittweisen und fortschreitenden Änderung des Wertes der Dichte (D) der äußeren Umgebungsluft des Drehflügelflugzeugs (1) berechnet wird.

**2.** Verfahren nach Anspruch 1,
**dadurch gekennzeichnet, dass** die Rechenregel (7) insbesondere folgender Gleichung entspricht:

$$NR_{ini}^2 . \sigma = NR_0^2 ,$$

wobei $NR_{ini}$ der Wert des ursprünglichen Sollwertes ist,
$\sigma$ die aktuelle Dichte der Außenumgebungsluft des Drehflügelflugzeugs ist,
$NR_0$ ein konstanter Wert ist, der sich auf eine vorbestimmte Antriebsgeschwindigkeit des Hauptrotors bezieht, unter Berücksichtigung einer Dichte der Außenumgebungsluft bei einem Atmosphärendruck von 1013,25 hPa und einer Temperatur von 15 °C.

**3.** Verfahren nach einem der Ansprüche 1 und 2,
**dadurch gekennzeichnet, dass** der Wert des Regulierungssollwertes (C), der an eine Regelungseinheit übertragen wird, der Wert des ursprünglichen Sollwerts ($NR_{ini}$) ist.

**4.** Verfahren nach einem der Ansprüche 1 bis 3,
**dadurch gekennzeichnet, dass** das Verfahren mindestens einen Schritt der Berechnung (9) des Wertes mindestens eines berechneten Sollwerts ($NR_c$) aufweist, wobei der Wert des berechneten Sollwerts ($NR_c$) aus dem Wert des ursprünglichen Sollwerts ($NR_{ini}$) hervorgeht, der verändert wird durch Anwendung mindestens eines Korrekturkriteriums (10', 10") bezüglich mindestens der Vortriebsgeschwindigkeit (AS) des Drehflügelflugzeugs (1) oder auch der Höhe (Z) des Vortriebs des Drehflügelflugzeugs (1).

**5.** Verfahren nach Anspruch 4,
**dadurch gekennzeichnet, dass** der berechnete Sollwert ($NR_c$) defniert ist durch die Anwendung einer Korrekturregel (10), die der folgenden Gleichung entspricht:

$$NR_c = NR_{ref} + k.(NR_{ini} - NR_{ref}) \quad ,$$

wobei $NR_c$ der Wert des berechneten Sollwerts ($NR_c$) ist, der aus der Anwendung der Korrekturregel (10) hervorgeht,
$NR_{ref}$ eine vorbestimmte Drehantriebsgeschwindigkeit des Hauptrotors (2) ist,
k ein konstanter, beschränkender Koeffizient ist, dessen Wert zwischen 0,3 und 1, jeweils einschließlich, liegt, und
$NR_{ini}$ der Wert des ursprünglichen Sollwerts ($NR_{ini}$) ist,

und wobei bei dieser Korrekturregel (10) der Wert von $NR_{ref}$ und der Wert von k vordefiniert sind, mindestens gemäß Vortriebsgeschwindigkeitsbereichen des Drehflügelflugzeugs, die im vorhinein festgelegt wurden, jeweils mindestens bei niedrigen Geschwindigkeiten (BV) kleiner als 50 kt $\pm$ 10% und bei hohen Geschwindigkeiten (VE) größer als 70 kt $\pm$ 10%.

**6.** Verfahren nach Anspruch 5,
**dadurch gekennzeichnet, dass** ein Wert eines ersten berechneten Sollwerts ($NR_{c1}$) erzeugt wird durch Anwendung eines Korrekturkriteriums (10') bezüglich der Vortriebsgeschwindigkeit (AS) des Drehflügelflugzeugs (1).

**7.** Verfahren nach Anspruch 6,
**dadurch gekennzeichnet, dass** bei einer hohen Vortriebsgeschwindigkeit (VE) des Drehflügelflugzeugs der Wert der Bezugsgeschwindigkeit ($NR_{ref}$) und der Wert des begrenzenden Koeffizienten (k) vorbestimmt sind in Übereinstimmung mit einem Wert des ersten berechneten Sollwerts ($NR_{c1}$), der als gleich dem Wert des ursprünglichen Sollwerts ($NR_{ini}$) definiert ist.

**8.** Verfahren nach einem der Ansprüche 6 und 7,
**dadurch gekennzeichnet, dass** bei Übergangs-Vortriebsgeschwindigkeiten (VT) des Drehflügelflugzeugs zwischen den niedrigen Geschwindigkeiten (BV) und den hohen Geschwindigkeiten (VE) der Wert des ersten berechneten Sollwerts ($NR_{c1}$) definiert ist durch eine Korrektur des Wertes des ursprünglichen Sollwerts ($NR_{ini}$) gemäß einer kontinuierlichen Änderung zwischen dem Wert des ersten berechneten Sollwerts ($NR_{c1}$), der bei niedrigen Temperaturen (BV) definiert ist, und dem Wert des ersten berechneten Sollwerts ($NR_{c1}$), der bei hohen Geschwindigkeiten (VE) definiert ist.

**9.** Verfahren nach einem der Ansprüche 6 bis 8,
**dadurch gekennzeichnet, dass** der an die Regelungseinheit (5) übertragene Wert des Regelungssollwertes (C) der Wert des ersten berechneten Sollwerts ($NR_{c1}$) ist.

**10.** Verfahren nach Anspruch 4,
**dadurch gekennzeichnet, dass** der Wert eines zweiten berechneten Sollwerts ($NR_{c2}$) erzeugt wird durch Anwendung eines Korrekturkriteriums (10") bezüglich eines Vortriebs des Drehflügelflugzeugs mit hohen Geschwindigkeiten (VE) für Höhenbereiche (Z) des Drehflügelflugzeugs (1), die zuvor festgelegt wurden, bzw. für niedrige Höhen (ZB) unterhalb von 250 m $\pm$ 20% und für große Höhen (ZE) höher als 650 m $\pm$ 20%.

**11.** Verfahren nach den Ansprüchen 2, 6 und 10,
**dadurch gekennzeichnet, dass** bei hohen Vortriebsgeschwindigkeiten (VE) des Drehflügelflugzeugs (1) der Wert des zweiten berechneten Sollwerts ($NR_{c2}$) nach den folgenden Modalitäten definiert ist:

- ) bei niedrigen Höhen (ZB) ist der Wert des zweiten berechneten Sollwerts ($NR_{c2}$) definiert durch eine Verminderung des Wertes des ursprünglichen Sollwerts ($NR_{ini}$) um einen konstanten Wert, der zwischen 3% und 10% des Wertes der vordefinierten Geschwindigkeit (NR0) der Rechenregel liegt,

- ) bei großen Höhen (ZE) der Wert des zweiten berechneten Sollwerts ($NR_{c2}$) definiert ist als gleich unterschiedslos dem Wert des ursprünglichen Sollwerts ($NR_{ini}$) oder dem Wert des ersten Sollwerts ($NR_{c1}$),
- ) bei gemäßigten Höhen (ZM) zwischen den niedrigen Höhen (ZB) und den großen Höhen (ZE) der Wert des zweiten berechneten Sollwerts ($NR_{c2}$) definiert ist gemäß einer kontinuierlichen Änderung zwischen dem Wert des zweiten berechneten Sollwerts ($NR_{c2}$), der bei niedrigen Höhen (ZB) definiert ist, und dem Wert des zweiten berechneten Sollwerts ($NR_{c2}$), der bei großen Höhen (ZE) definiert ist.

**12.** Verfahren nach einem der Ansprüche 10 und 11,
**dadurch gekennzeichnet, dass** der an die Regelungseinheit (5) übertragene Wert des Regelungssollwertes (C) der Wert des zweiten berechneten Sollwerts ($NR_{c2}$) ist.

**13.** Verfahren nach einem der Ansprüche 1 bis 12,
**dadurch gekennzeichnet, dass** das Verfahren vor der Übertragung des Wertes des Regelungssollwertes (C) an die Regelungseinheit (5) einen Schritt (11) der Begrenzung des Wertes des Regelungssollwertes (C) in einem vordefinierten tolerierten Geschwindigkeitsbereich gemäß einer nominalen Antriebsgeschwindigkeit des Hauptrotors, zwischen einer maximalen Grenzgeschwindigkeit ($NR_{max}$) von 105% ± 3% der Nominalgeschwindigkeit und einer minimalen Grenzgeschwindigkeit ($NR_{min}$) von 92% ± 3% der Nominalgeschwindigkeit, aufweist.

**14.** Verfahren nach Anspruch 13,
**dadurch gekennzeichnet, dass** die maximale Grenzgeschwindigkeit ($NR_{max}$) verringert wird gemäß einem Überschreitungsverbot einer vorbestimmten Mach-Zahl, die für die Enden der Rotorblätter des Hauptrotors (2) zugelassen ist.

**15.** Verfahren nach Anspruch 14,
**dadurch gekennzeichnet, dass** bei niedrigen Vortriebsgeschwindigkeiten (BV) des Drehflügelflugzeugs (1) unterhalb von 50 kt ± 10% die vordefinierte Mach-Zahl, die für die Enden der Rotorblätter des Hauptrotors (2) zugelassen ist, zwischen 0,70 und 0,80 liegt.

**16.** Verfahren nach einem der Ansprüche 14 und 15,
**dadurch gekennzeichnet, dass** bei großen Vortriebsgeschwindigkeiten (VE) des Drehflügelflugzeugs (1) größer als 70 kt ± 10% die vordefinierte zulässige Mach-Zahl am Ende der Rotorblätter des Hauptrotors (2) zwischen 0,90 und 0,95 liegt.

**17.** Verfahren nach einem der Ansprüche 13 bis 16,
**dadurch gekennzeichnet, dass** die minimale Grenzgeschwindigkeit ($NR_{min}$) angehoben wird gemäß einem Überschreitungsverbot eines zugelassenen Maximalwerts des mittleren Auftriebskoeffizienten von Rotorblättern des Hauptrotors (2) für einen gegebenen Vortriebsparameter des Hauptrotors (2).

**18.** Verfahren nach einem der Ansprüche 13 bis 17,
**dadurch gekennzeichnet, dass** der an die Regelungseinheit (5) übertragene Wert des Regelungssollwerts (C) der Wert eines beliebigen Werts der maximalen Grenzgeschwindigkeit ($NR_{max}$) und der minimalen Grenzgeschwindigkeit ($NR_{min}$) ist in Übereinstimmung mit einer Beschränkung des Werts des Regelungssollwerts (C) in dem tolerierten Geschwindigkeitsbereich.

**19.** Verfahren nach einem der Ansprüche 1 bis 18,
**dadurch gekennzeichnet, dass** das Verfahren vor der Übertragung des Wertes des Regelungssollwerts (C) an die Regelungseinheit (5) einen Beschränkungsschritt (18) aufweist, der eine Änderung des Wertes des Regelungssollwertes (C) pro Sekunde auf zwischen 0,5 bis 2% des Wertes des Regelungssollwertes (C) beschränkt.

**20.** Verfahren nach Anspruch 19,
**dadurch gekennzeichnet, dass** der Wert des Regelungssollwerts (C),
der an die Regelungseinheit (5) übertragen wird, der Wert eines korrigierten Sollwerts ($NR_{rec}$) ist, der aus dem Beschränkungsschritt (18) hervorgeht.

**21.** Verfahren nach einem der Ansprüche 1 bis 20,
**dadurch gekennzeichnet, dass** das Verfahren einen Schritt einer Anzeige mindestens einer ersten Information (16) bezüglich der gemessenen Antriebsgeschwindigkeit des Hauptrotors (2) und einer zweiten Information (17) bezüglich des Wertes des Regelungssollwertes (C), der an die Regelungseinheit (5) übertragen wurde, aufweist.

## Claims

1. Method for rotating at least one main rotor (2), with a substantially vertical axis, of a rotorcraft (1) by a propulsion unit (3) fitted to the rotorcraft (1), said method comprising at least the following operations:

   - ) applying, via a control unit (4), a method for determining the value of a control setpoint (C) relative to a rotation speed of said at least one main rotor (2), said method determining the value of the control setpoint (C) at least on the basis of the value of a physicochemical parameter of the external air around the rotorcraft, and
   - ) sending the value of the previously determined control setpoint (C) to a control unit (5) controlling the operation of the propulsion unit (3), the control unit (5) causing the said at least one main rotor (2) to be driven in accordance with the value of the control setpoint (C) sent,

   **characterised in that** the value of the control setpoint (C) is determined at least by applying a calculation rule (7) that continuously generates a progressive and continued variation in the value of an initial setpoint ($NR_{ini}$) from which the control setpoint (C) is determined, the progressive and continued variation in the value of the initial setpoint ($NR_{ini}$) being calculated from a progressive and continued variation in the value of the density (D) of the external air surrounding the rotorcraft (1),

2. Method according to claim 1,
   **characterised in that** the calculation rule (7) complies particularly with the following expression:

$$NR_{ini}^2.\sigma=NR_0^2$$

   in which expression:

   $NR_{ini}$ is the value of the initial setpoint,
   $\sigma$ is the current density of the external air surrounding the rotorcraft,
   $NR_0$ is a constant value relating to a predefined drive speed of the main rotor considered on the basis of the density of the surrounding external air at an atmospheric pressure of 1013.25 hPa and a temperature of 15°C.

3. Method according to any one of claims 1 and 2,
   **characterised in that** the value of the control setpoint (C) sent to the control unit is the value of the initial setpoint ($NR_{ini}$).

4. Method according to any one of claims 1 to 3,
   **characterised in that** said method comprises at least one calculation operation (9) to calculate the value of at least one calculated setpoint ($NR_c$), the value of said calculated setpoint ($NR_c$) resulting from the value of the initial setpoint ($NR_{ini}$) modified by applying at least one correction criterion (10', 10") related to at least the forward speed (AS) of the rotorcraft 1 but also to the forward altitude (Z) of the rotorcraft (1).

5. Method according to claim 4,
   **characterised in that** the value of the calculated setpoint ($NR_c$) is defined by applying a correction rule (10) that complies with the following expression:

$$NR_c = NR_{ref} + k.(NR_{ini} - NR_{ref})$$

   in which correction rule:

   $NR_c$ is the value of the calculated setpoint ($NR_c$) that results from applying the correction rule (10),
   $NR_{ref}$ is a predefined reference speed of rotation of the main rotor (2),
   k is a constant limiting coefficient with a value in the range 0.3 to 1 inclusive, and
   $NR_{ini}$ is the value of the initial setpoint ($NR_{ini}$),

   and in which correction rule (10) the value of $NR_{ref}$ and the value of k are predefined at least on the basis of the predetermined ranges of forward speed of the rotorcraft, respectively at least at low speeds (BV) below 50 kt plus or minus 10% and at high speeds (VE) above 70 kt plus or minus 10%.

**6.** Method according to claim 5,
**characterised in that** the value of a first calculated setpoint ($NR_{c1}$) is generated by applying a correction criterion (10') relative to the forward speed (AS) of the rotorcraft (1).

**7.** Method according to claim 6,
**characterised in that** at high forward speeds (VE) of the rotorcraft the value of the reference speed ($NR_{ref}$) and the value of the limiting coefficient (k) are predefined on the basis of a value of the first calculated setpoint ($NR_{c1}$) that is defined as being equal to the value of the initial setpoint ($NR_{ini}$)

**8.** Method according to any one of claims 6 and 7,
**characterised in that** at transitional forward speeds (VT) of the rotorcraft comprised between the low speeds (BV) and the high speeds (VE), the value of a first calculated setpoint ($NR_{c1}$) is defined by correcting the value of the initial setpoint ($NR_{ini}$) on the basis of a continuous variation between the value of the first calculated setpoint ($NR_{c1}$) defined at low speeds (BV) and the value of the first calculated setpoint ($NR_{c1}$) defined at high speeds (VE).

**9.** Method according to any one of claims 6 to 8,
**characterised in that** the value of the control setpoint (C) sent to the control unit (5) is the value of the first calculated setpoint ($NR_{c1}$).

**10.** Method according to claim 4,
**characterised in that** the value of a second calculated setpoint ($NR_{c2}$) is generated by applying a correction criterion (10") relative to a forward movement of the rotorcraft at high speeds (VE) for predetermined ranges of altitude (Z) of the rotorcraft (1), respectively at low altitudes (ZB) below 250 m plus or minus 20% and high altitudes (ZE) above 650 m plus or minus 20%.

**11.** Method according to claims 2, 6 and 10,
**characterised in that** at high forward speeds (VE) of the rotorcraft (1), the value of the second calculated setpoint ($NR_{c2}$) is defined by the following methods:

- ) at low altitudes (ZB) the value of the second calculated setpoint ($NR_{c2}$) is defined by reducing the value of the initial setpoint ($NR_{ini}$) by a constant value in the range 3% to 10% of the predefined value for speed (NR0) of the calculation rule,
- ) at high altitudes (ZE) the value of the second calculated setpoint ($NR_{c2}$) is defined as equal, irrespective of the value of the initial setpoint ($NR_{ini}$) or of the value of the first setpoint ($NR_{c1}$),
- ) at moderate altitudes (ZM) comprised between low altitudes (ZB) and high altitudes (ZE), the value of the second calculated setpoint ($NR_{c2}$) is defined on the basis of a continuous variation between the value of the second calculated setpoint ($NR_{c2}$) defined at low altitudes (ZB) and the value of the second calculated setpoint ($NR_{c2}$) defined at high altitudes (ZE).

**12.** Method according to any one of claims 10 and 11,
**characterised in that** the value of the control setpoint (C) sent to the control unit (5) is the value of the second calculated setpoint ($NR_{c2}$).

**13.** Method according to any one of claims 1 to 12,
**characterised in that** the method comprises, before the value of the control setpoint (C) is sent to the control unit (5), an operation (11) to limit the value of the control setpoint (C) to within a range of tolerated speeds predefined on the basis of a nominal drive speed of the main rotor, between a maximum limiting speed ($NR_{max}$) of 105% plus or minus 3% of the nominal speed and a minimum limiting speed ($NR_{min}$) of 92% plus or minus 3% of the nominal speed.

**14.** Method according to claim 13,
**characterised in that** the maximum limiting speed ($NR_{max}$) is reduced in accordance with a prohibition on exceeding a predefined allowed Mach number at the end of the blade of the main rotor (2),

**15.** Method according to claim 14,

**characterised in that** at low forward speeds (BV) of the rotorcraft (1) below 50 kt plus or minus 10%, the predefined allowed Mach number at the end of the blade of the main rotor (2) is in the range 0.70 to 0.80.

**16.** Method according to any one of claims 14 and 15,
**characterised in that** at high forward speeds (VE) of the rotorcraft (1) above 70 kt plus or minus 10%, the predefined allowed Mach number at the end of the blade of the main rotor (2) is in the range 0.90 to 0.95.

**17.** Method according to any one of claims 13 to 16,
**characterised in that** the minimum limiting speed ($NR_{min}$) is increased in accordance with a prohibition on exceeding a maximum allowed value of the mean lift coefficient of the blades of the main rotor (2) for a given forward movement parameter of the main rotor (2).

**18.** Method according to any one of claims 13 to 17,
**characterised in that** the value of the control setpoint (C) sent to the control unit (5) is the value of either the maximum limiting speed ($NR_{max}$) or the minimum limiting speed ($NR_{min}$) on the basis of a limitation of the value of the calculated setpoint (C) to within the range of tolerated speeds.

**19.** Method according to any one of claims 1 to 18,
**characterised in that** the method comprises, before the value of the control setpoint (C) is sent to the control unit (5), a restriction operation (18) limiting a variation per second of the value of the control setpoint (C) to within the range 0.5% to 2% of the value of the control setpoint (C).

**20.** Method according to claim 19,
**characterised in that** the value of the control setpoint (C) sent to the control unit (5) is the value of a rectified setpoint ($NR_{rec}$) resulting from execution of the restriction operation (18).

**21.** Method according to any one of claims 1 to 20,
**characterised in that** the method comprises an operation of displaying at least a first piece of information (16) relating to the measured drive speed of the main rotor (2) and a second piece of information (17) relating to the value of the control setpoint (C) sent to the control unit (5).

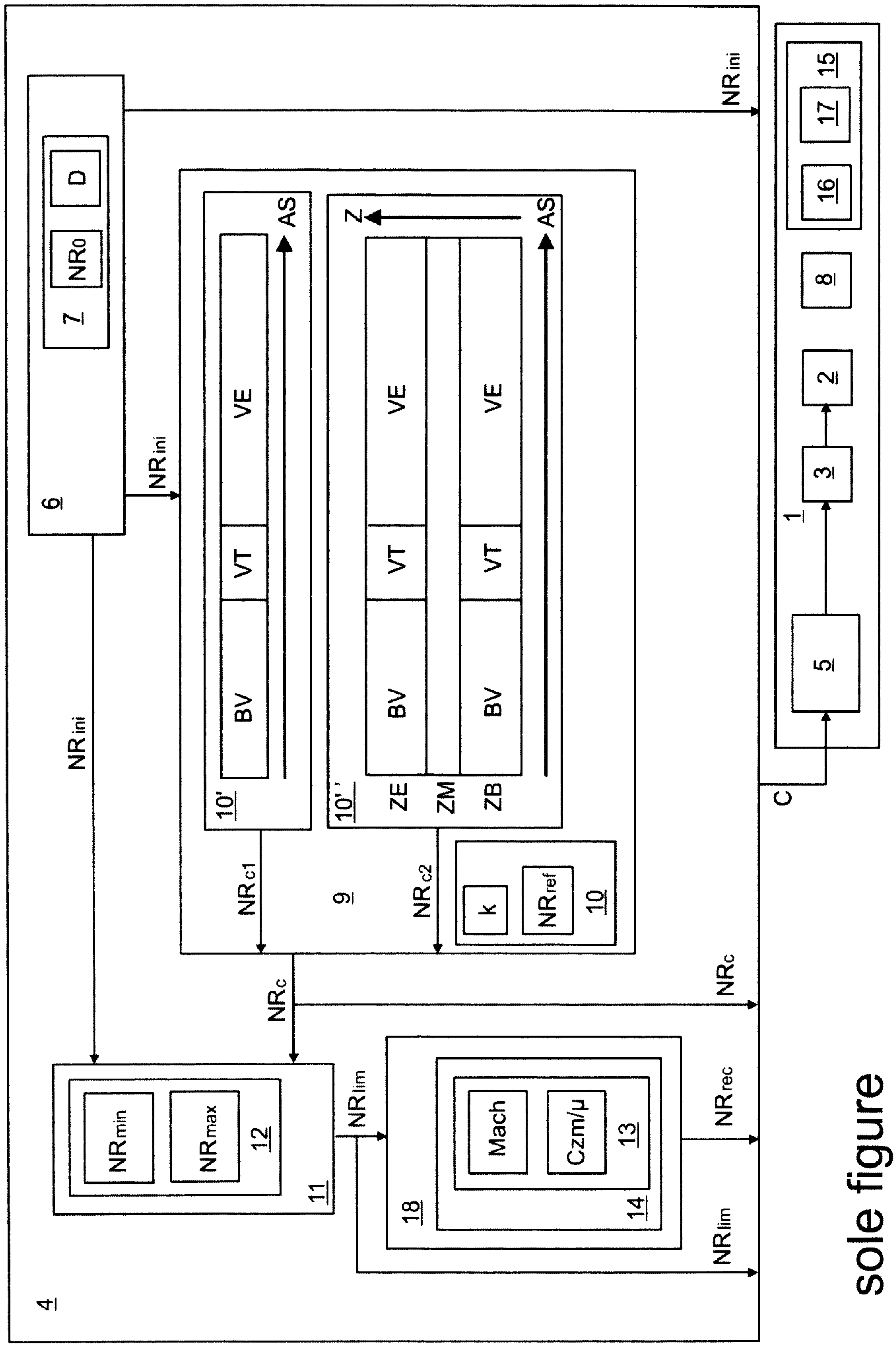
4
6
7
NR0
D
NRini
9
10'
10''
BV
VT
VE
AS
Z
ZE
ZM
ZB
NRc1
NRc2
10
k
NRref
NRc
11
12
NRmin
NRmax
NRlim
18
14
13
Mach
Czm/μ
NRrec
C
1
5
3
2
8
15
16
17

sole figure

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2003051461 A, CERTAIN B.
- US 6198991 B, YAMAKAWA
- WO 9942360 A, KAREM ABRAHAM E.
- US 2007118254 A, BARNES G.W.
- WO 2010143051 A


### Littérature non-brevet citée dans la description


- **C.G. SCHAEFER JR ; F.H. LUTZE, JR.** Enhanced energy maneuverability for attack helicopters using continuous variable rotor speed control. *47th forum American Helicopter Society,* 1991, 1293-1303